# EUROPEAN PATENT APPLICATION

(11) **EP 4 439 465 A1**
(43) Date of publication of application: **02.10.2024**
(21) Application number: 24157240.3
(22) Date of filing: 13.02.2024
(51) Int. Cl.: G06T 7/80

(54) **DETERMINING CAMERA ORDERING FOR EXTRINSIC CALIBRATION OF MULTI-CAMERA SYSTEM**

(30) Priority: 17.03.2023 SE 2350306
(71) Applicant: Sony Group Corporation, Tokyo 108-0075 (JP)
(72) Inventor: HUANG, Sangxia, Basingstoke, RG22 4SB (GB)
(74) Representative: Neij & Lindberg AB

(57) **Abstract**

A device determines an order for combining image data from a plurality of cameras (C1-Cn) in extrinsic calibration of the cameras. The device obtains detection data, [DD], indicative of scene points seen by each camera and an estimated relative angle between camera pairs. The device generates a first ordering, [COR1], of camera pairs based on the estimated relative angle, and repeatedly selects a current camera pair, CCP, from [COR1] until a termination criterion is fulfilled. For each current camera pair, the device initiates an evaluation procedure to generate a secondary ordering, [COR2], of a set of remaining cameras, [REM], based on [DD]. The termination criterion is fulfilled when [COR2] includes a predefined number of cameras. The evaluation procedure sequentially adds a respective remaining camera to [COR2] as a function of the scene points that are seen by the respective remaining camera and at least two cameras among the current camera pair and [COR2]. When the termination criterion is fulfilled, the device generates a final ordering, [FCOR], of cameras by appending [COR2] to CCP for which the first termination criterion is fulfilled.

## Description

### Technical Field

The present disclosure relates generally to calibration of multi-camera systems and, in particular, to a technique of determining an ordering for combining data from a plurality of cameras in extrinsic calibration of the plurality of cameras.

### Background Art

Recovering 3D position and/or 3D pose of objects from images has been a longstanding problem in computer vision. Techniques for 3D positioning and pose determination have a variety of applications such as 3D vision inspection, product assembly, goods inspection, human-computer interaction, video surveillance, sports broadcasting, industry robot control, navigation, etc.

One common solution is to use multiple cameras with overlapping fields of view and process individual video streams from the cameras for detection of keypoints, identify correspondence between keypoints in different views, and calculate 3D positions based on the correspondence between keypoints, and optionally temporal information. For such calculation, calibration data representing the position and orientation of the cameras needs to be known with reasonable accuracy. The determination of the calibration data is known as "extrinsic calibration" in the art.

It has been proposed, for example in EP3883857, to perform the extrinsic calibration by observing human individuals by the multiple cameras, and specifically to calculate the calibration data based on keypoints that are detected in images of the human individuals and associated between the cameras. This approach allows the extrinsic calibration to be automated and re-calibration of the system to be performed by simply observing people moving around in front of the cameras.

Extrinsic calibration may involve determining an initial estimation of calibration data for a first pair of cameras among the multiple cameras based on keypoints in corresponding images from the first pair of cameras, and then adding additional cameras one by one to gradually expand and refine the calibration data to include the additional cameras. EP3883857 proposes an ordering algorithm that starts by selecting the first pair of cameras based on the number of keypoints that are associated between images taken by different pairs of cameras.

### Brief Summary

It is an objective to at least partly overcome one or more limitations of the prior art.

Another objective is to provide a technique of determining an ordering cameras of a multi-camera system for use in extrinsic calibration.

Yet another objective is to provide such a technique that enables improved performance of the extrinsic calibration.

One or more of these objectives, as well as further objectives that may appear from the description below, are at least partly achieved by a computer-implemented method of determining an order for combining data from a plurality of cameras in extrinsic calibration of the plurality of cameras, a computer-readable medium, and a device according to the independent claims, embodiments thereof being defined by the dependent claims.

Still other objectives, as well as features, aspects and technical effects will appear from the following detailed description, from the attached claims as well as from the drawings.

### Brief Description of Drawings

FIG. 1A is a perspective view of an example installation of a multi-camera system, FIG. 1B exemplifies object detection data generated in the system, FIG. 1C exemplifies keypoints detected for a human object, and FIG. 1D illustrates a view of one of the cameras in the system onto the scene.
FIG. 2 is a flow chart of an example method for extrinsic calibration of cameras in a multi-camera system.
FIG. 3 illustrates scene points triangulated from keypoints in two camera views.
FIG. 4A is a top plan view of a plurality of cameras arranged to monitor a scene, and FIG. 4B is a top plan view of three cameras with relative angles indicated between the cameras.
FIG. 5A is a schematic diagram to illustrate overall processing steps and flow of data in the example method of FIG. 5B, and FIG. 5B is a flow chart of an example method for determining a camera ordering in accordance with embodiments.
FIG. 6A is a flow chart of an example procedure for determining a first ordering of cameras in accordance with embodiments, and FIG. 6B is a diagram of example angular ranges used by the procedure in FIG. 6A.
FIGS-7A-7B are flow charts of example procedures for determining a secondary ordering of cameras in accordance with embodiments.
FIG. 8 is a block diagram of a machine that may implement methods and procedures in accordance with embodiments.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

As used herein, the terms "multiple", "plural" and "plurality" are intended to imply provision of two or more elements, unless stated otherwise. The term a "set" of elements is intended to imply a provision of one or more elements. The term "and/or" includes any and all combinations of one or more of the associated listed elements.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

While operations are depicted in the drawings in a particular order, this should not be understood as requiring that such operations be performed in the particular order shown or in sequential order, or that all illustrated operations be performed, to achieve desirable results.

Like reference signs refer to like elements throughout.

Before describing embodiments in more detail, a few definitions will be given.

As used herein, "object" denotes any animate or inanimate object that may be represented by a set of keypoints in an image. Examples of animate objects include human individual and animals. Examples of inanimate objects include different types of vehicles, such as cars, bicycles, motorcycles, etc., as well as buildings, fences, furniture, interior decoration, exercise equipment, etc.

As used herein, "scene" denotes a three-dimensional (3D) space that is collectively monitored by two or more cameras, which have at least partly overlapping fields of views.

As used herein, "camera" is an imaging device configured to generate images of a scene by detection of electromagnetic waves and/or mechanical waves that are generated and/or reflected by the scene and objects therein. The camera may be responsive to electromagnetic waves in any wavelength range, including but not limited to ultraviolet, visible or infrared radiation, or any part or combination thereof. The camera may be configured to produce still images or a digital video stream, i.e. a coherent time sequence of images. The respective image is a two-dimensional (2D) representation of the scene, or part thereof, as seen by the camera.

As used herein, "view" or "camera view" refers to the part of the scene that is included within the field of view of a camera. The view may be embodied as an image, for example a digital image.

As used herein, "field of view" has its conventional meaning and denotes the extent of the scene that is observed by the respective camera at any given moment and may be defined as a solid angle through which the camera is sensitive to the electromagnetic/mechanical waves.

As used herein, "keypoint" has its conventional meaning in the field of computer vision and is also known as an interest point. A keypoint is a spatial location or point in an image that defines what is interesting or what stand out in the image and may be defined to be invariant to image rotation, shrinkage, translation, distortion, etc. More generally, a keypoint may be denoted a "feature point" on an object to be detected in the image, with the feature point having a predefined placement on the object. Keypoints may be defined for a specific type of object, for example a human body, a part of the human body, or an inanimate object with a known structure or configuration. In the example of a human body, keypoints may identify one or more joints and/or extremities. Keypoints may be detected by use of any existing feature detection algorithm(s), for example image processing techniques that are operable to detect one or more of edges, corners, blobs, ridges, etc. in digital images. Non-limiting examples of feature detection algorithms comprise SIFT (Scale-Invariant Feature Transform), SURF (Speeded Up Robust Feature), FAST (Features from Accelerated Segment Test), SUSAN (Smallest Univalue Segment Assimilating Nucleus), Harris affine region detector, and ORB (Oriented FAST and Rotated BRIEF). Further information about conventional keypoint detectors is found in the article "Local invariant feature detectors: a survey", by Tuytelaars et al, published in Found. Trends. Comput. Graph. Vis. 3(3), 177-280 (2007). Further examples of feature detection algorithms are found in the articles "Simple Baselines for Human Pose Estimation and Tracking", by Xiao et al, published at ECCV 2018, and "Deep High-Resolution Representation Learning for Human Pose Estimation", by Sun et al, published at CVPR 2019. Correspondingly, objects may be detected in images by use of any existing object detection algorithm(s). Non-limiting examples include various machine learning-based approaches or deep learning-based approaches, such as Viola-Jones object detection framework, SIFT, HOG (Histogram of Oriented Gradients), Region Proposals (RCNN, Fast-RCNN, Faster-RCNN), SSD (Single Shot MultiBox Detector), You Only Look Once (YOLO, YOLO9000, YOLOv3), and RefineDet (Single-Shot Refinement Neural Network for Object Detection).

As used herein, "scene point" is any point in a scene that is included and detectable as a keypoint in two or more camera views. The scene point has a three-dimensional (3D) location in a common coordinate system.

As used herein, "common coordinate system" refers to a reference system that uniquely defines the 3D location of a scene point in relation to an origin.

As used herein, "calibration data" refers to one or more parameters that define the positions and orientations of the cameras monitoring the scene. The calibration data may be relative or absolute. In some embodiments, the calibration data comprises a so-called camera projection matrix ("camera matrix") for the respective camera. Such a camera matrix may or may not comprise inner ("intrinsic") parameters of the respective camera. In some embodiments, the camera matrix for a camera *i* is defined as ***Pᵢ*** = ***Kᵢ***[***Rᵢ Tᵢ***], with ***Kᵢ*** being the intrinsic matrix of the camera, ***Rᵢ*** being a rotation matrix, and ***Tᵢ*** being a translation vector. In some embodiments, the intrinsic matrix is known for the respective camera.

Embodiments are related to extrinsic calibration of a multi-camera system based on one or more objects detected by the cameras in the system. The following description will be given for objects in the form of human individuals, but the disclosure may be applied to any type of object, be it animate or inanimate.

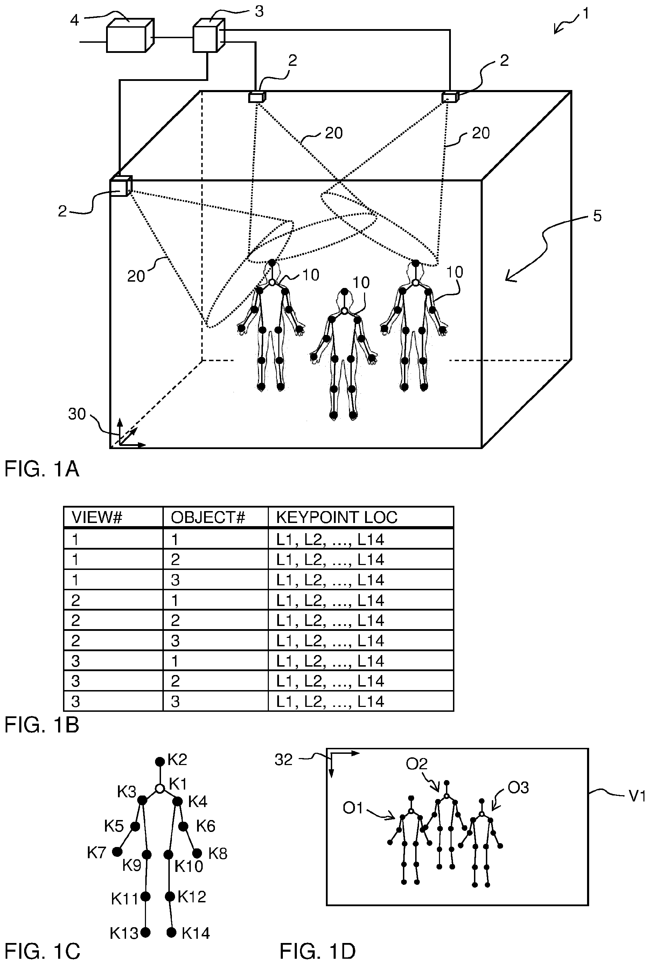

FIG. 1A shows an example arrangement of an example multi-camera system 1, denoted "monitoring system" in the following. The monitoring system 1 is arranged to monitor a scene 5. In the illustrated example, three individuals 10 are in the scene 5. The system 1 comprises a plurality of cameras 2 which are oriented with their respective field of view 20 towards the scene 5. The scene 5 is associated with a fixed 3D coordinate system 30, which is denoted "scene coordinate system" or "common coordinate system" herein. The cameras 2 may be fixed or moveable. When the system 1 has been calibrated, the relative positions and orientations of the cameras 2 are known for each image taken. The cameras 2 may be synchronized to capture a respective image at approximately the same time, or at least with a maximum time difference which depends on the expected maximum speed of movement of the objects 10. In one example, a maximum time difference of 0.1-0.5 seconds may provide sufficient accuracy for normal human motion. The cameras 2 are oriented with overlapping fields of view 20 and thus produce at least partly overlapping images of the scene 5.

The images captured by the respective camera 2 are received by a detection device 3, which is configured to determine one or more keypoints of one or more objects in the respective image. The detection device 3 may implement any conventional object detection technique for identifying objects of a generic or specific type in the respective image and may implement any conventional feature detection technique for identifying one or more keypoints of the respective object, for example as described hereinabove. The detection device 3 may also pre-process the incoming images, for example for noise reduction, contrast enhancement, etc. In an alternative configuration, the monitoring system 1 comprises a plurality of detection devices 3, for example one for each camera 2, where the detection devices 3 may be co-located or integrated with the cameras 2.

The detection device 3 produces object detection data, which identifies one or more keypoints of one or more objects detected in the respective image. The object detection data is denoted ODD in the following. An example of the ODD is shown in FIG. 1B. Although FIG. 1B illustrates a table, the ODD may be given in any format. In the illustrated example, the ODD represents each camera (view) by a respective view identifier (1-3 in FIG. 1B) and each object by a respective object identifier (1-3 in FIG. 1B), and comprises a keypoint position for each keypoint detected for the respective object (L1-L14 in FIG. 1B). An example of keypoints K1-K14 that may be detected for a human individual is shown in FIG. 1C. However, any number of keypoints may be detected depending on implementation. One or more of the keypoints may be designated as a main keypoint. The main keypoint may be identifiable with greater accuracy than other key points and/or may have a specific location within the object, for example close to its center. In the schematic example of FIG. 1C, the main keypoint K1 is indicated by an open circle and corresponds to the neck of the respective individual.

The detection device 3 is configured to detect a predefined number of keypoints of the respective object. If a keypoint is not detected, the detection device 3 may enter a predefined value (for example, a null value) into the ODD. The detection device 3 may also include a confidence score for each object and/or keypoint in the ODD, the confidence score representing a level of certainty for the respective detection. FIG. 1D shows an example image captured by one of the cameras 2 in FIG. 1A and represents three detected objects O1, O2 and O3 with associated keypoints. The detected position of the respective keypoint is given by 2D coordinates in a local and fixed coordinate system 32 of the view V1.

The system 1 further comprises a positioning device 4, which is configured to operate on the ODD to compute, and possibly track over time, one or more 3D positions of the individual(s) 10 in the scene 5. The 3D positions may be given in the scene coordinate system 30 and are denoted "scene points" in the following. The scene points, when representing an object (for example, a human individual), defines a "3D pose" of the object. The positioning device 4 may compute the scene points by conventional triangulation.

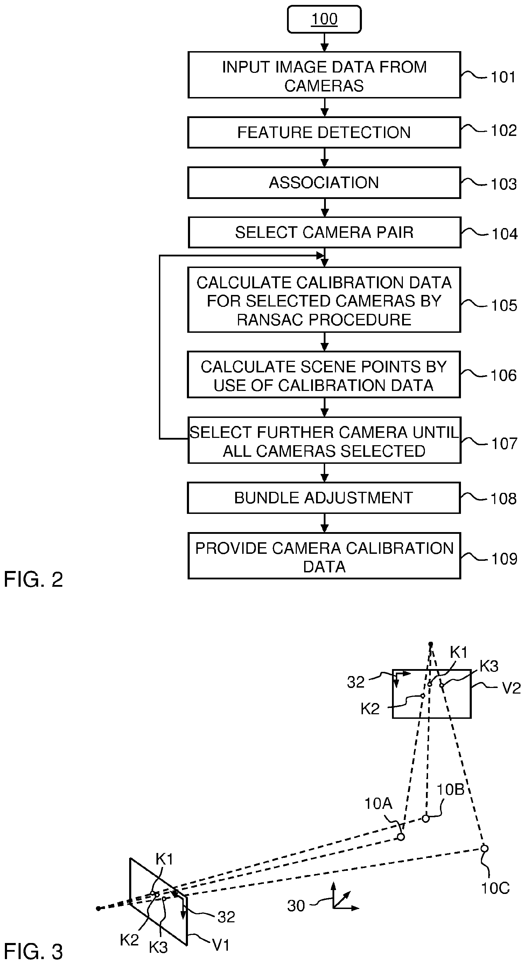

FIG. 3 shows an example of triangulation of scene points 10A-10C in the scene coordinate system 30 based on the locations of keypoints K1-K3 in relation to the respective local coordinate system 32 in views V1, V2 of two cameras. The scene points 10A-10C are computed by identifying intersections of rays that extend from camera centers through the respective keypoint K1-K3 in the views V1, V2. The triangulation may be implemented to also to account for observation errors in the keypoint locations and may operate on keypoints from any number of views. There are numerous available triangulation methods that may be implemented by the positioning device 4, including but not limited to so-called linear methods, optimal methods or branch-and-bound search methods. Generally, the triangulation operates on the calibration data that represents the positions and orientations of the cameras.

FIG. 2 is a flow chart of an example method 100 for generating calibration data for the cameras in a monitoring system, for example the system 1 as shown in FIG. 1A. In the example of FIG. 1A, the calibration method 100 may be performed jointly by the detection device 3 and the positioning device 4. Alternatively, at least part of the calibration method may be performed by a dedicated device, which may be connected to receive the ODD from the detection device 3 and/or the images from the cameras 2 and may provide the resulting calibration data to the positioning device 4.

In step 101, image data is received from the cameras. The image data may be in form of raw image data from the respective camera, or a processed version of the raw data. The image data may comprise a single image or a time sequence of images that are generated by the respective camera during an observation time window.

In step 102, the image data is processed for feature detection, resulting in the above-mentioned keypoints and keypoint locations, for example as shown by the ODD in FIG. 1B. Step 102 may apply any conventional object detection technique and/or feature detection technique, for example as described hereinabove. In one example, step 102 may operate a human pose estimation algorithm on the image data. Such algorithms are configured to detect people in an image or a time sequence of images, and output the location of joints and extremities of the detected people. It may be noted that it is not necessary to use all available keypoints for calibration. For example, keypoints that are expected to have larger observation errors may be excluded. For a human individual, keypoints representing ears, feet, hands, etc. may be excluded.

In step 103, the ODD is processed to associate or match keypoints between the images (views), and optionally across time if time sequences of images are being processed. There are numerous available techniques for association/matching that may be applied by step 103, including but not limited to histograms, SIFT descriptors, appearance models, spatial-temporal continuity, etc. Step 103 may involve the use of neural networks. Step 103 results in associations of keypoints between images and optionally over time. If time sequences of images are processed, step 103 may be seen to produce a trajectory for each keypoint, given by pairs of keypoint location and time point. To improve the quality of such trajectories, step 103 may comprise a sub-step of operating a smoothing function on the respective trajectory. The smoothing function may comprise interpolation and/or low-pass filtering. Such a smoothing results in an updated set of associated keypoints, which may be used as input by one or more of steps 105, 106, 108.

In steps 104-107, preliminary calibration data for all cameras is calculated. In step 104, an initial pair of cameras are selected. In step 105, a total set of associated keypoints between images from the selected pair of cameras (first and second cameras) are processed for calculation of preliminary calibration data (PCD) for these cameras. Each PCD candidate defines the position and orientation of the second camera in relation to the first camera. A standard algorithm for this calculation is the so-called eight-point algorithm, although any alternative algorithm may be used. In some embodiments, step 105 may comprise a RANSAC procedure, in which different subsets of the associated keypoints are processed to calculate a plurality of PCD candidates. The different PCD candidates are evaluated, for example by calculating reprojection errors (RE) for each PCD candidate, determining a count of inliers for each PCD candidate, and selecting the PCD candidate that has the highest inlier count, as is well known in the art. In step 106, scene points are calculated for the total set of associated keypoints by use of the selected PCD candidate from step 105. These scene points are added to a reconstructed set, and the selected camera pair is added to a calibrated camera set. In step 107, a further camera is selected for processing by steps 105-106. Step 107 is performed until all cameras have been processed. In each repetition of step 105, the RANSAC procedure operates on keypoints from more than two cameras. A standard algorithm for calculation of PCD candidates using data from more than two cameras is the so-called PnP algorithm, although any alternative algorithm may be used. The RANSAC procedure is performed based on keypoints that are seen by the further camera and that correspond to scene points in the reconstructed set. The total set of associated keypoints is thus limited to the keypoints that are seen by both the further camera and the cameras in the calibrated camera set. In each repetition of step 106, scene points are calculated for the total set of associated keypoints by use of a selected PCD candidate from step 105, scene points not already present in the reconstructed set are added to the reconstructed set, and the further camera is added to the calibrated camera set. Each of the selected PCD candidates defines the position and orientation of a respective camera in relation to the above-mentioned first camera.

In step 108, a so-called bundle adjustment is performed using the selected PCD candidates and the reconstructed set produced by steps 104-107. In this context, the bundle adjustment produces refined calibration data for the cameras. The bundle adjustment is a well-known technique of simultaneously refining scene points and calibration data in view of an optimization criterion. Conventionally, bundle adjustment involves minimizing an objective function that defines a total reprojection error. In such an objective function, the scene points and the calibration data are the unknown variables of the objective function. In bundle adjustment, the objective function may be optimized in an iterative fashion, with initial values ("starting values") for the calibration data and the scene points being given by the selected PCD candidates and the reconstructed set.

In step 109, the method 100 provides final camera calibration data, which is the refined calibration data produced by step 109, or a post-processed version thereof. In some embodiments, depending on the common coordinate system, the post-processing may be applied to convert the refined calibration data into a coordinate system with a coordinate axis perpendicular to the ground, for example by rotating the common coordinate system. In some embodiments, post-processing may be applied to estimate the scaling of the monitoring system, for example by detecting images of an object of known length, measuring the time it takes for an object travelling at known speed or acceleration between locations (for example, estimate initial height by measuring time it takes for an object to free fall to the ground), or manipulating images to position keypoints at known locations. The camera calibration data provided by step 109 may be used by the processing device 4 to compute the scene points when the system 1 is operated for monitoring the scene 5.

It is understood that the calibration method 100 may be repeated to update the calibration data ("re-calibration"), for example to account for intentional or unintentional changes in the position and/or orientation of one or more of the cameras. Such re-calibration may be triggered based on image analysis. For example, in the example with human individuals, the positioning device 4 may analyze the distribution of the length of the limbs of individuals over time, to detect a need for re-calibration. If the monitoring system 1 is well calibrated, the distribution should have a small standard deviation. Thus, in one example, re-calibration may be trigged when the standard deviation for limb length exceeds a predefined threshold.

Detailed examples of the calibration method 100 is found in aforesaid EP3882857, which is incorporated herein in its entirety by reference.

The present Applicant has found that the accuracy of the calibration data produced by the calibration method 100 may differ significantly depending on the ordering of the cameras in steps 104-107. A poor choice of the initial camera pair in step 104 will inevitably result in poor calibration data. A poor choice may imply that the estimation of the calibration data for the initial camera pair is noisy and that the reconstructed scene points are noisy. This may lead to further bad estimations, or it may not be possible to add the remaining cameras due to error in the estimation. The ordering of cameras applied by step 107 when repeatedly adding further cameras to be processed by steps 105-106 for determination of selected PCD candidates may also have a significant impact on the outcome of the calibration method 100 when an object is represented by many keypoints in images from one or more cameras and by few keypoints in images from one or more other cameras.

This problem is addressed by the present disclosure. It is a general desire to achieve an automatic calibration of the cameras 2 in the monitoring system 1 of FIG. 1A. The automatic calibration should preferably be achieved based on image data from the cameras and without requiring a specific ordering of the cameras 2. A specific ordering of the cameras requires installation personnel to know exactly which camera should go where. This means more advance planning and more potential for error. Further, the automatic calibration may be applied to any existing installation of cameras in any type of facility, for example pre-installed security cameras in an airport, entrance hall, railway station, etc. The cameras in an existing installation are generally unlikely to be arranged in an optimum way for calculation of 3D positions and/or 3D poses of objects. Further, when cameras are to be installed specifically for the purpose of providing image data for 3D reconstruction, it may still be quite difficult to mount the respective camera at a specific location with a specific orientation in relation to the scene. For example, the mounting of cameras may be constrained by lack of available space, lack of mounting structures, presence of structures that occlude the field of view, etc. It is thus desirable to allow for flexibility in the mounting position and orientation of the respective camera.

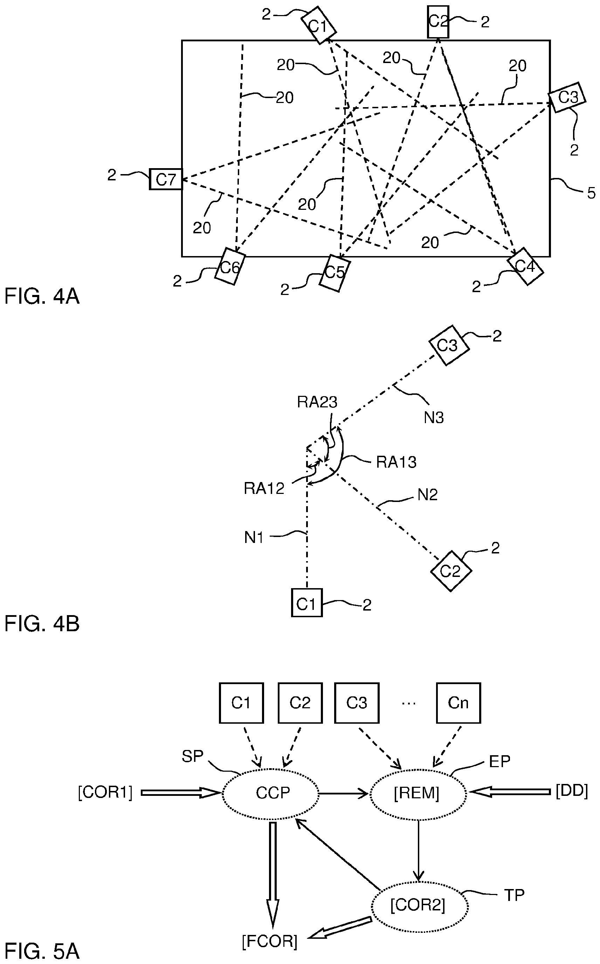

FIG. 4A is a top plan view of an example arrangement of multiple cameras 2 that are included in a monitoring system. The cameras 2 are enumerated C1-C7 and are arranged in relation to a scene 5. Dashed lines 20 indicate the field of view (FOV) of the respective camera 2. In the illustrated example, the overlap in FOV differs among the cameras. For cameras C1-C5, the FOV overlap is relatively uniform. Depending on focal depth, the FOV of camera C7 may also overlap well with the FOVs of cameras C1-C5. The FOV of camera C6, on the other hand, overlaps moderately with the FOV of camera C7, and effectively not at all with the FOVs of cameras C1-C5. It is intuitively understood that the order in which the cameras C1-C7 are applied by steps 105-107 in the calibration method 100 (FIG. 2) may have a large impact of the quality of the resulting calibration data.

The embodiments that are described hereinbelow operate on the relative angle between pairs of cameras. FIG. 4B is a top plan view of three cameras 2, enumerated C1-C3. For each camera C1-C3, a reference line N1-N3 is defined. All reference lines are defined in the same way in relation to the cameras 2. In the illustrated example, the respective reference line N1-N3 is a symmetry line or centerline of the FoV 20 of the camera. The relative angle between two cameras 2 is given by the included angle between the reference lines of the cameras 2. The relative angle RA12 between cameras C1, C2 is given by the included angle between N1, N2, the relative angle RA13 between cameras C1, C3 is given by the included angle between N1, N3, and the relative angle R23 between cameras C2, C3 is given by the included angle between N2, N3. The included angle is defined to be in the range of 0°-180°. Depending on implementation the relative angle may be an angle in a 2D plane (co-planar angle) or in 3D space. The 2D plane may, for example, be parallel to the ground in the scene 5, which corresponds to an angle seen in a top plan view onto the scene 5. If the relative angle is an angle in 3D space, the reference lines between the cameras may not, and typically will not, intersect. To visualize the relative angle, the cameras may be translated so that their reference lines intersect. It may be noted that in practice, the relative angle is calculated by multiplying two rotation matrices and extracting the angles from the resulting matrix.

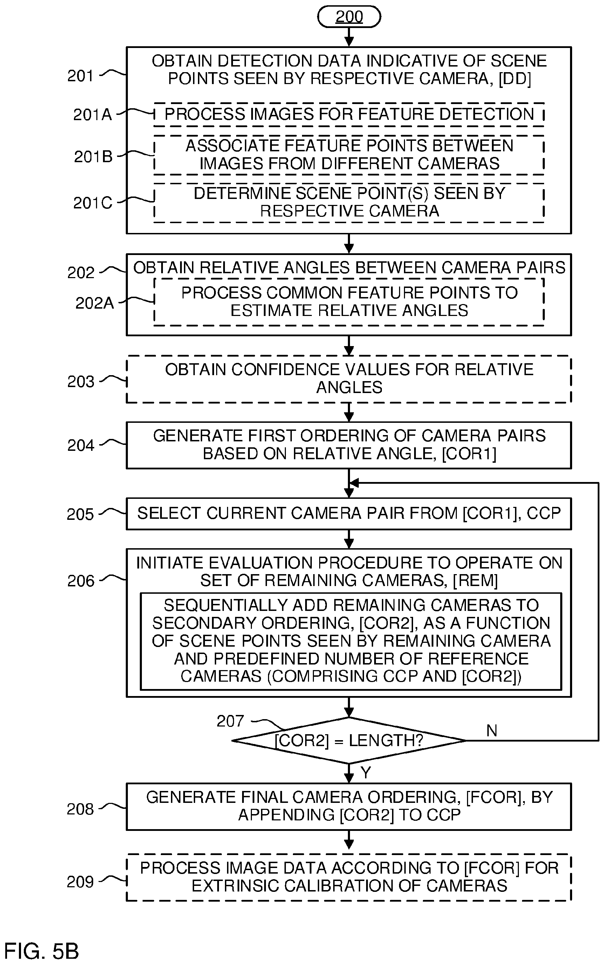

Embodiments will now be described with reference to FIGS 5A-5B. FIG. 5B is a flow chart of an example method 200 of determining an order ("camera ordering") for combining image data from a plurality of cameras in extrinsic calibration, for example in accordance with the calibration method 100 of FIG. 2. The method 200 may be performed by a calculation device, which may be included in or connected to the positioning device 4 in FIG. 1A. FIG. 5A is a schematic overview of how data items are generated and used during operation of the method 200. The method 200 provides a deterministic and automatic technique of determining a camera ordering that is likely to result in high-quality extrinsic calibration of a plurality of cameras.

The method 200 operates on image data from the cameras to be calibrated. The image data may be the same image data that is processed in the calibration method 100 of FIG. 2, or different image data generated by the cameras to be calibrated.

In step 201, detection data is obtained to be indicative of the scene points that are seen by the respective camera. As understood from the foregoing, a scene point is represented as a keypoint (feature point) in an image taken by the camera. Thus, a scene point that is "seen" by a camera is detectable within the view of the camera. The detection data may be generated as part of the method 200 by processing the image data, or be determined by a separate process and input by step 201. The detection data is also denoted [DD] herein. An example procedure for determining [DD] is represented by steps 201A-201C in FIG. 5B. In step 201A, one or more images taken by the respective camera are processed for keypoint detection. In step 201B, keypoints that are detected by different cameras are processed for identification of keypoints that have a common origin in the scene. Thus, in step 201B, associations are determined between keypoints detected by different cameras, resulting in sets of associated keypoints. In step 201C, a respective scene point is assigned to each set of associated keypoints. It may be noted that steps 201A-201C may be implemented in correspondence with steps 102-103 in FIG. 2. The skilled person understands that the relation between scene points and cameras may be directly or indirectly represented in [DD]. For example, [DD] may be represented similarly to ODD in FIG. 1B.

In step 202, an estimated relative angle (ERA) between all different camera pairs is obtained. In the example of FIG. 4B, step 202 results in RA12, RA23 and RA13. The ERAs may be estimated by an operator based on the orientation of the respective camera and input to step 202. In other embodiments, the ERAs are estimated without human involvement. In one example, each camera has a sensor that indicates the orientation of the camera, and thereby its reference line (cf. N1-N3 in FIG. 4B), for example in relation to the direction of gravity. In step 202, orientation data from the sensors may be received and processed to estimate the ERAs. In some embodiments, represented by step 202A, the associated keypoints for the respective camera pair are processed to determine the ERA between the cameras in the camera pair. Step 202A may be performed by analogy with step 105 to generate preliminary calibration data, PCD, for the camera pair. The ERA is then extracted from the PCD, which may be a camera matrix. It is well known to the skilled person how to extract a relative angle from such a camera matrix. Step 202A has the technical advantage of requiring neither manual measurement, nor use of additional sensors.

In step 203, which is optional, a confidence value is obtained for the respective ERA. The confidence value represents the estimated accuracy of the ERA. For a manually measured ERA, the confidence value may be estimated and input by the operator. If ERA is estimated based on orientation data from sensors, the confidence value may be estimated by conventional error analysis based on the accuracy of the sensors. In the example of step 202A, the confidence data may be given by the count of inliers ("inlier count") for the PCD (cf. step 105).

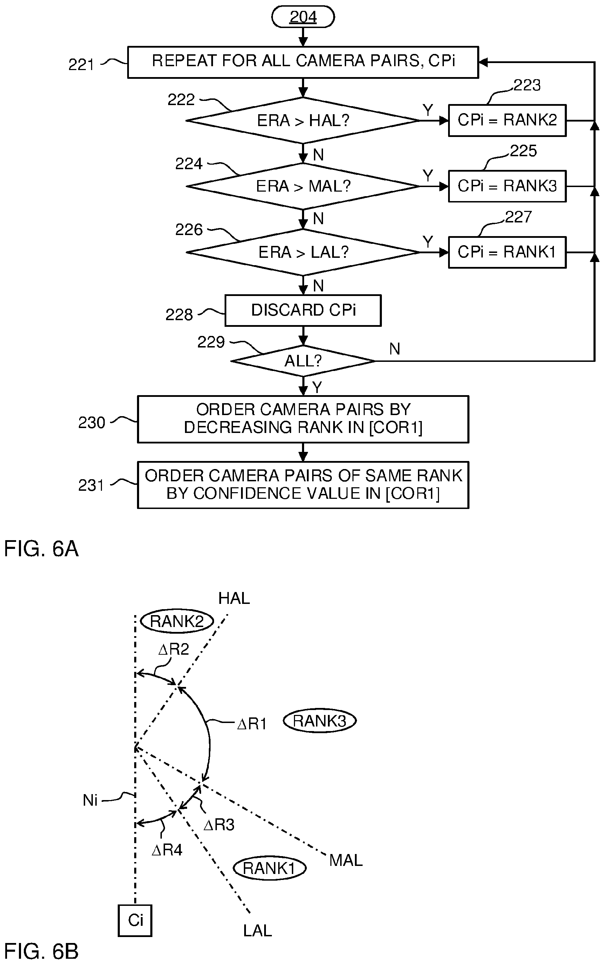

In step 204, a first ordering of camera pairs is generated based on the ERAs obtained in step 202, and optionally further based on the confidence values from step 203. Step 204 is based on the insight that the ERA of a camera pair has a significant impact on the accuracy of the PCD that is determined based on images from the camera pair. Step 204 is thus performed to sort the camera pairs by their perceived ability to produce accurate PCD, given by the ERAs. In the first ordering, denoted [COR1], the camera pairs are arranged with decreasing perceived ability. It is conceivable that step 204 results in some camera pairs not being included in [COR1]. Embodiments of step 204 are described further below with reference to FIGS 6A-6B.

The method 200 then repeatedly performs steps 205-207 until a termination condition is fulfilled in step 207. In step 205, a current camera pair is selected from the first ordering, [COR1]. The current camera pair is also denoted CCP herein. Step 205 starts from the beginning of [COR1] and proceeds through [COR1] with every repetition of step 205. In step 206, an evaluation procedure is initiated for CCP to generate a secondary ordering of a set of remaining cameras among the available cameras. The secondary ordering is denoted [COR2] herein. In some embodiments, the set of remaining cameras, denoted [REM], includes all cameras in [COR1] other than (except for) the cameras in CCP. The evaluation procedure may operate to sequentially add cameras from [REM] to [COR2] according to a predefined algorithm and based on the detection data, [DD], obtained in step 201. To facilitate a general description of the evaluation procedure, the notion of "reference cameras" is introduced. The reference cameras consist of the cameras in CCP and any further camera that is included in [COR2] at each specific time set during the procedure. The content of the reference cameras thus changes as cameras are added to [COR2] during the evaluation procedure.

The predefined algorithm of the evaluation procedure adds the remaining cameras as a function of the common scene points (#CSP, below) between the respective remaining camera and the reference cameras. In a specific implementation of step 206, the evaluation procedure goes through all scene points seen by the respective remaining camera and determines the common scene points (#CSP) as a count of the scene points that are also seen by at least two of the cameras that are included in CCP and [COR2] at the respective time step during the procedure. The rationale behind the evaluation procedure is that the ability to produce accurate PCD increases with the number of common scene points, i.e. the number of associated feature points that are available for use in triangulation. Thus, by sorting the remaining cameras in [COR2] by decreasing number of common scene points, the remaining cameras that are most likely to be useful for triangulation are prioritized.

In step 207, which defines the termination condition for the repetition of steps 205-206, the length of [COR2] is evaluated in relation to a limit value. If the length is less than the limit value, the method 200 returns to step 205, in which another CCP is selected from [COR1]. If the length is equal to the limit value, the termination condition is fulfilled and the method proceeds to step 208. The length of [COR2] corresponds to the number of cameras that are included in [COR2]. The limit value may be set in relation to the number of cameras in [COR1]. In one embodiment of step 207, the termination condition is fulfilled when all cameras in [COR1] are included in the combination of CCP and [COR2] from steps 205-206.

In step 208, a final ordering of cameras is generated by appending [COR2] from the latest execution of step 206 to CCP from the latest execution of step 205. The final ordering is denoted [FCOR] herein.

As indicated by dashed lies, the method 200 may comprise a step 209 of processing image data from the plurality of cameras in accordance with [FCOR] for extrinsic calibration of the plurality of cameras. Step 209 may be performed in accordance with the calibration method 100 in FIG. 2. If step 209 operates on the image data that is represented by the detection data [DD] (step 101), steps 101-103 of the calibration method 100 may be omitted.

FIG. 5A is a high-level illustration of the method 200. Thick arrows represent data input/output, and thin solid arrows represent flow of processing. It is assumed that the monitoring system includes cameras enumerated C1, C2, C3, ..., Cn. The enumeration is merely made for the purpose of illustration and does not as such imply any ordering of the cameras. As shown, a first ordering [COR1] has been generated for the cameras (step 204). A selection procedure, SP, is performed (step 205) to select a current camera pair, CCP, in accordance with [COR1]. In this example, the first camera pair in [COR1] happens to be C1, C2 which are selected as CCP by SP, as indicated by dashed arrows. By this selection, C3-Cn form remaining cameras [REM]. An evaluation procedure, EP, is operated on [REM] based on the detection data [DD] to generate a secondary ordering [COR2] (step 206). [COR2] is subjected to termination processing, TP, to evaluate if [COR2] includes a sufficient number of cameras (step 207). If so, [FCOR] is generated from CCP and [COR2] (step 208). If [COR2] is found not to include a sufficient number of cameras, the next camera pair in [COR1] is selected as CCP by SP, resulting in another composition of cameras in [REM]. Then, [REM] is evaluated by EP, resulting in [COR2]. If [COR2] fulfills the termination condition in TP, [FCOR] is generated based on the latest CPP and [COR2]. Otherwise, SP selects the next camera pair in [COR1] as CCP. The method proceeds until the termination condition is fulfilled or there is no further camera pair to be selected in [COR1]. In the latter case, the method may output a failure report, indicating to the user that no camera ordering could be determined.

FIG. 6A is a flow chart of an example procedure that may be part of step 204 in the method of FIG. 5B. The example procedure in FIG. 6A generates the first ordering [COR1] based on the ERAs obtained in step 202 and optionally based on the confidence values obtained in step 203. The procedure performs evaluation steps 222, 224, 226 for all camera pairs among the plurality of cameras. In FIG. 6A, a camera pair is designated by CPi. The evaluation steps 222, 224, 226 involves mapping the ERA of CPi to a plurality of predefined angular ranges to assign CPi to an angular range among the plurality of angular ranges. When all camera pairs have been evaluated in steps 222, 224, 226, a step 230 is provided to arrange the camera pairs in [COR1] based on the assigned angular range and in accordance with a predefined order for the predefined angular ranges. Camera pairs that are assigned to the same angular range may be given any relative order in [COR1]. In an alternative, represented by step 231, camera pairs that are assigned to the same angular range are arranged by decreasing confidence value in [COR1].

In the embodiment of FIG. 6A, the predefined order for the angular ranges are given by a respective rank value. The example in FIG. 6A will be described in more detail with reference to FIG. 6B, which shows an example of angular ranges and associated rank values that may be used in FIG. 6A. The ranges are defined in relation to the reference line Ni of a camera Ci. Since an ERA is an included angle, the ranges only cover the overall range of 0°-180°. In the illustrated example, there is a first angular range, ΔR1, which is given the highest rank value, RANK3. A second angular range, ΔR2, borders on and contains larger relative angles than ΔR1 and is associated with the second highest rank value. The border between ΔR1 and ΔR2 is defined by a higher angular limit, HAL. A third angular range, ΔR3, borders on and contains smaller relative angles than ΔR1 and is associated with the lowest rank value, RANK1. The border between ΔR2 and ΔR3 is defined by a middle angular limit, MAL. RANK1. A fourth angular range, ΔR4, borders on and contains smaller relative angles than ΔR3 and is not associated with any rank value. The border between ΔR2 and ΔR3 is defined by a lower angular limit, LAL.

Reverting the evaluation steps in FIG. 6A, ERA is evaluated in relation to ΔR2 in step 222. If ERA is larger than HAL, the camera pair CPi is assigned RANK2 in step 223 and the procedure returns to step 221 to select another camera pair. Otherwise, the procedure proceeds to step 224, in which ERA is evaluated in relation to ΔR1. If ERA is larger than MAL, the camera pair CPi is assigned RANK3 in step 225 and the procedure returns to step 221 to select another camera pair. Otherwise, the procedure proceeds to step 224, in which ERA is evaluated in relation to ΔR1. If ERA is larger than LAL, the camera pair CPi is assigned RANK1 in step 227 and the procedure returns to step 221 to select another camera pair. Otherwise, ERA falls within ΔR4 and the procedure proceeds to step 228, in which the camera pair CPi is discarded and is thus excluded from [COR1].

The rationale behind the angular ranges in FIG. 6B is that if the ERA for a camera pair is too large or too small, it is less likely that image data from these cameras will yield preliminary calibration data (PCD) of high quality in step 105 of the calibration method 100 (FIG. 2). The first angular range ΔR1 is placed midway between these extremes and is defined to include ERAs that are found to yield high quality PCDs. The first angular range ΔR1 is therefore given the highest rank value (RANK3). After significant experimentation, it is currently believed that adequate results are achieved when ΔR1 is defined by a MAL in the range of 50°-70° and a HAL in the range of 120°-140°. Experiments also indicate that too small ERAs are less relevant for step 105 than too large ERAs. Also, camera pairs with large ERAs may be less affected by occlusions since they view the scene from different sides. For these reasons, the second angular range ΔR2 is given the second highest rank value (RANK2). Experiments also indicate that only a subset of the smallest ERAs are significantly useful for step 105. For smaller ERAs, the determination of calibration data becomes more sensitive to noise in keypoint detection. Such noise is inevitable and may become especially large when keypoints are detected on a live body. Therefore, the smallest ERAs tend to produce unstable results, if anything, and may be discarded to improve processing speed with minor or no decrease in the quality of the extrinsic calibration. For this reason, the third angular range ΔR3 is given the lowest rank value (RANK1), and the camera pairs that fall within the fourth angular range ΔR4 may be discarded. Experiments indicate that adequate results are achieved for LAL in the range of 30°-50°. It is also conceivable to add a fifth angular range between ΔR2 and 180°, and discard camera pairs with ERAs within the fifth angular range. The largest ERAs may cause the same problem as the smallest ERAs, although the largest ERAs are less likely to occur in practice, if cameras are mounted high and look down onto the scene. Instead of discarding camera pairs, it is conceivable to assign an even lower rank value to ΔR4 and to the fifth angular range, if present, and include the related camera pairs at the end of [COR1]. In a further alternative, ΔR4 is omitted and ΔR3 extends from 0° to MAL.

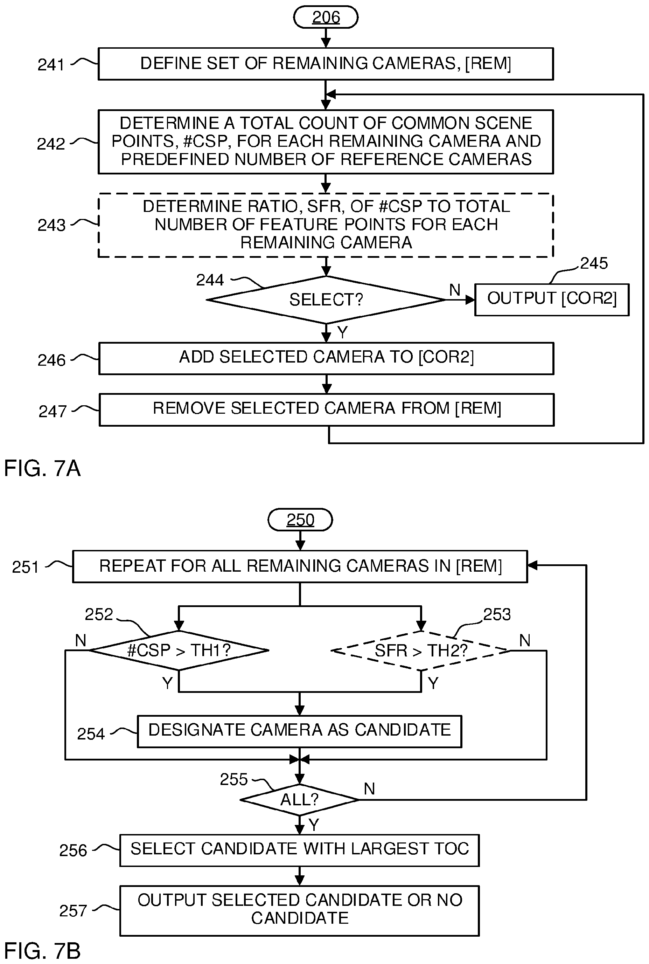

FIG. 7A is a flow chart of an example procedure that may be part of step 206 in the method of FIG. 5B. The example procedure in FIG. 7A is an implementation of the evaluation procedure that produces the secondary ordering, [COR2], for a current camera pair, CCP. In step 241, the set of remaining cameras [REM] is defined in view of CCP. As noted above, [REM] may be defined to include all cameras in [COR1] other than the cameras in CCP. In the example of FIG. 7A, the evaluation procedure repeatedly initiates or performs an updating procedure, comprising steps 242-247, until a second termination criterion is fulfilled in step 244. In step 242, a count of the common scene points is determined for each remaining camera in [REM]. Step 242 is performed by use of the detection data [DD] obtained in step 201. As explained above, the common scene points are scene points that are seen by the remaining camera as well as a given number of reference cameras. In the following, the count of common scene points is denoted #CSP for the respective remaining camera. In one embodiment, step 242 comprises evaluating all scene points that are seen by the respective remaining camera to determine #CSP as a count of the scene points that are also seen by at least two of the cameras that are included in CCP and [COR2].

In step 244, a selection criterion is evaluated based on #CSP for each remaining camera, to determine if either one remaining camera or no remaining camera is selected from [REM]. For example, a remaining camera may be selected if its #CSP exceeds a threshold. If no remaining camera is selected in step 244, the second termination condition is fulfilled and the evaluation procedure proceeds to step 245, in which [COR2] is output. If one remaining camera is selected in step 244, the updating procedure adds this selected camera to [COR2] in step 246 and removes the selected camera from [REM]. Then, the evaluation procedure proceeds to step 242 in which another updating procedure is initiated.

As indicated by dashed lines, the evaluation procedure may comprise an additional step 243 of determining a relation, SFR, for each remaining camera. SFR represents the ratio between #CSP for the remaining camera and the total number of feature points in the image(s) taken by the remaining camera. Reverting to the method 200 in FIG. 2, it is realized that the total number of feature points is inherently obtained in step 201A. Thus, in some embodiments, [DD] is generated to include the total number of feature points for each camera. In step 243, the total number of feature points for the respective remaining camera may be determined from [DD]. As will be described in further detail below with reference to FIG. 7B, the selection criterion may be evaluated in step 244 based on both #CSP and SFR. One reason for including SFR in step 244 is that a high SFR for a remaining camera indicates that a large proportion of the feature points detected by this camera is likely to be useful in step 105 of the calibration method 100. Thus, while #CSP represents an absolute measure of the relevance of images produced by a camera, SFR is a corresponding relative measure. By including SFR in the selection criterion of step 244, the ability of step 244 to select a remaining camera may be expanded.

FIG. 7B is a flow chart of a procedure 250 which may be part of the updating procedure in FIG. 7A. In some embodiments, the procedure 250 may be part of step 244. As indicated by steps 251 and 255, the procedure 250 operates on all remaining cameras in [REM]. For each remaining camera, #CSP from step 242 is evaluated in relation to a first threshold TH1 in step 252. If #CSP exceeds TH1, the remaining camera is designated as a candidate camera in step 254. Optionally, if SFR is determined in step 243, the procedure 250 may comprise a step 253 of evaluating SFR for each remaining camera in relation to a second threshold TH2. If SFR exceeds TH2, the remaining camera is designated as a candidate camera in step 254. Thus, after step 255, there may exist any number of candidate cameras. Each of the candidate cameras is associated with a #CSP value and an SFR value, where at least one of these values is sufficiently high in view of TH1 and TH2. In step 256, if there are plural candidate cameras, the candidate camera with the largest #CSP value is selected. If there is only one candidate camera, this candidate camera is inherently selected. In step 257, the selected camera is output, for use by step 246 in FIG. 7A. If there is no camera candidate after step 255, a corresponding indication is output in step 257, causing step 244 to terminate the evaluation procedure and proceed to step 245.

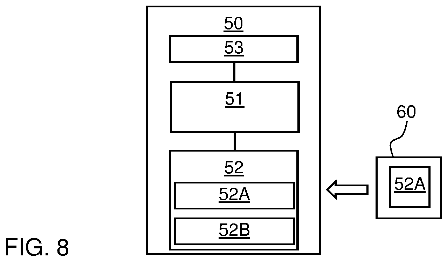

The structures and methods disclosed herein may be implemented by hardware or a combination of software and hardware. In some embodiments, such hardware comprises one or more software-controlled computer resources. FIG. 8 schematically depicts such a computer resource 50, which comprises a processing system 51 and computer memory 52 that define logic for controlling the operation of the computer resource 50. The computer resource 50 further comprises an interface 53 for input and/or output of data. The interface 53 may be configured for wired and/or wireless communication, including communication with the detection device 3 and/or the cameras 2 (FIG. 1A). Alternatively or additionally, the interface 53 may be configured to receive user input, for example via a user interface. The processing system 51 may e.g. include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program 52A comprising computer instructions is stored in the memory 52 and executed by the processing system 51 to perform any of the methods, operations, procedures, functions, or steps described herein. As indicated in FIG. 8, the memory 52 may also store control data 52B for use by the processing system 52, for example various predefined values such as thresholds, limits, etc. The control program 52A may be supplied to the computing resource 50 on a computer-readable medium 60, which may be a tangible (non-transitory) product (e.g. magnetic medium, optical disk, read-only memory, flash memory, etc.) or a propagating signal.

The techniques disclosed and exemplified herein have a variety of applications such as 3D vision inspection, product assembly, goods inspection, human-computer interaction, video surveillance, sports broadcasting, industry robot control, navigation, etc.

In the following, clauses are recited to summarize some aspects and embodiments as disclosed in the foregoing.

C1. A computer-implemented method of determining an order for combining data from a plurality of cameras in extrinsic calibration of the plurality of cameras, said computer-implemented method comprising: obtaining detection data that is indicative of scene points seen by a respective camera among the plurality of cameras, wherein each scene point is included in a scene monitored by the plurality of cameras and is detectable as a feature point in one or more images taken by the respective camera; obtaining an estimated relative angle between each pair of cameras among the plurality of cameras; generating a first ordering of pairs of cameras based on the estimated relative angle; repeatedly selecting a current pair of cameras from said first ordering until a first termination criterion is fulfilled; for the current pair of cameras from the first ordering, initiating an evaluation procedure to generate a secondary ordering of a set of remaining cameras among the plurality of cameras based on the detection data, wherein the first termination criterion is fulfilled when the secondary ordering includes a predefined number of cameras, and wherein the evaluation procedure sequentially adds a respective remaining camera to the secondary ordering as a function of the scene points that are seen by the respective remaining camera and given number of reference cameras, wherein the reference cameras comprise the current pair of cameras and any further camera in the secondary ordering; and generating, when the first termination criterion is fulfilled, a final ordering of cameras by appending the secondary ordering to the current pair of cameras for which the first termination criterion is fulfilled.

C2. The method of C1, wherein said generating the first ordering comprises: mapping the estimated relative angle of the respective pair of cameras to a plurality of predefined angular ranges to assign the respective pair of cameras to an angular range among the plurality of predefined angular ranges; and arranging the respective pair of cameras in the first ordering based on the assigned angular range and in accordance with a predefined order for the predefined angular ranges.

C3. The method of C2, further comprising obtaining a confidence value indicative of the accuracy of the estimated relative angle between each pair of cameras among the plurality of cameras, wherein said generating the first ordering further comprises arranging pairs of cameras that are assigned to a respective angular range by decreasing confidence value in the first ordering.

C4. The method of C2 or C3, wherein the angular ranges comprises a first angular range, a second angular range, which borders on and contains larger relative angles than the first angular range, and a third angular range, which borders on and contains smaller relative angles than the first angular range, wherein the predefined order comprises the first, second and third angular ranges in sequence.

C5. The method of C4, wherein the angular ranges comprises a fourth angular range, which borders on and contains smaller relative angles than the third range, wherein pairs of cameras that are assigned to the fourth angular range are excluded from the first ordering.

C6. The method of C5, wherein a border between the third and fourth angular ranges is at 30°, 35°, 40°, 45° or 50°.

C7. The method of any one of C4-C6, wherein the first angular range extends from 50°, 55°, 60°, 65° or 70° to 120°, 125°, 130°, 135° or 140°.

C8. The method of any preceding clause, wherein the evaluation procedure comprises repeatedly initiating an updating procedure until a second termination criterion is fulfilled, wherein the updating procedure comprises: determining, for a respective remaining camera in the set of remaining cameras, a count of the scene points that are seen by the respective remaining camera and at least two reference cameras; selecting, among the set of remaining cameras, either one remaining camera or no remaining camera based on the count of the respective remaining camera; adding said one remaining camera to the secondary ordering; and removing said one remaining camera from the set of remaining cameras, wherein the second termination condition is fulfilled if no remaining camera is selected.

C9. The method of C8, wherein said one remaining camera has a count that exceeds a first threshold.

C10. The method of C8 or C9, wherein said selecting comprises: designating the respective remaining camera for which the count exceeds the first threshold as a candidate camera, and selecting the candidate camera with a largest count as said one remaining camera.

C11. The method of C10, wherein the detection data is further indicative of a total number of feature points in said one or more images taken by the respective camera, wherein the method further comprises determining a relation between the count of scene points and the total number of feature points for the respective remaining camera, and wherein said selecting further comprises: designating the respective remaining camera for which the relation exceeds a second threshold as a candidate camera.

C12. The method of any preceding clause, wherein the first termination criterion is fulfilled when the secondary ordering includes all cameras in the first ordering except for the current pair of cameras.

C13. The method of any preceding clause, wherein said obtaining the detection data comprises: processing the one or more images taken by the respective camera for detection of feature points; determining associations between the feature points detected by different cameras; and assigning a respective scene point to each set of associated feature points.

C14. The method of any preceding clause, wherein said obtaining the estimated relative angle comprises processing the common feature points for estimation of the relative angle.

C15. A computer-readable medium comprising computer instruction which, when executed by a processor, causes the processor to perform a method in accordance with any one of C1-C14.

C16. A device configured to determine an order for combining data from a plurality of cameras in extrinsic calibration of the plurality of cameras, said device comprising logic configured to operate the device to: obtain detection data that is indicative of scene points seen by a respective camera among the plurality of cameras, wherein each scene point in included in a scene monitored by the plurality of cameras and is detectable as a feature point in one or more images taken by the respective camera; obtain an estimated relative angle between each pair of cameras among the plurality of cameras; generate a first ordering of pairs of cameras based on the estimated relative angle; repeatedly select a current pair of cameras from said first ordering until a first termination criterion is fulfilled; initiate, for the current pair of cameras from the first ordering, an evaluation procedure to generate a secondary ordering of a set of remaining cameras among the plurality of cameras based on the detection data, wherein the first termination criterion is fulfilled when the secondary ordering includes a predefined number of cameras, wherein the evaluation procedure sequentially adds a respective remaining camera to the secondary ordering as a function of the scene points that are seen by the respective remaining camera and a given number of reference cameras, wherein the reference cameras comprise the current pair of cameras and any further camera in the secondary ordering; and generate, when the first termination criterion is fulfilled, a final ordering of cameras by appending the secondary ordering to the current pair of cameras for which the first termination criterion is fulfilled.

## Claims

**1.** A computer-implemented method of determining an order for combining data from a plurality of cameras in extrinsic calibration of the plurality of cameras, said computer-implemented method comprising:
obtaining (201) detection data that is indicative of scene points seen by a respective camera among the plurality of cameras, wherein each scene point is included in a scene monitored by the plurality of cameras and is detectable as a feature point in one or more images taken by the respective camera;
obtaining (202) an estimated relative angle between each pair of cameras among the plurality of cameras;
generating (204) a first ordering ([COR1]) of pairs of cameras based on the estimated relative angle;
repeatedly selecting (205) a current pair of cameras (CCP) from said first ordering ([COR1]) until a first termination criterion is fulfilled (207);
for the current pair of cameras (CCP) from the first ordering, initiating (206) an evaluation procedure to generate a secondary ordering ([COR2]) of a set of remaining cameras ([REM]) among the plurality of cameras based on the detection data, wherein the first termination criterion is fulfilled when the secondary ordering ([COR2]) includes a predefined number of cameras, and wherein the evaluation procedure sequentially adds a respective remaining camera to the secondary ordering ([COR2]) as a function of the scene points that are seen by the respective remaining camera and given number of reference cameras, wherein the reference cameras comprise the current pair of cameras (CCP) and any further camera in the secondary ordering ([COR2]); and generating (208), when the first termination criterion is fulfilled, a final ordering ([FCOR]) of cameras by appending the secondary ordering ([COR2]) to the current pair of cameras (CCP) for which the first termination criterion is fulfilled,
wherein said generating (204) the first ordering comprises:
mapping (222, 224, 226) the estimated relative angle of the respective pair of cameras to a plurality of predefined angular ranges to assign the respective pair of cameras to an angular range among the plurality of predefined angular ranges; and
arranging (230) the respective pair of cameras in the first ordering based on the assigned angular range and in accordance with a predefined order for the predefined angular ranges.

**3.** The method of claim 2, further comprising (203) obtaining a confidence value indicative of the accuracy of the estimated relative angle between each pair of cameras among the plurality of cameras, wherein said generating (204) the first ordering further comprises arranging (231) pairs of cameras that are assigned to a respective angular range by decreasing confidence value in the first ordering ([COR1]).

**4.** The method of claim 2 or 3, wherein the angular ranges comprises a first angular range (ΔR1), a second angular range (ΔR2), which borders on and contains larger relative angles than the first angular range (ΔR1), and a third angular range (ΔR3), which borders on and contains smaller relative angles than the first angular range (ΔR1), wherein the predefined order comprises the first, second and third angular ranges (ΔR1, ΔR2, ΔR3) in sequence.

**5.** The method of claim 4, wherein the angular ranges comprises a fourth angular range (ΔR4), which borders on and contains smaller relative angles than the third range (ΔR3), wherein pairs of cameras that are assigned to the fourth angular range (ΔR4) are excluded from the first ordering.

**6.** The method of claim 5, wherein a border between the third and fourth angular ranges (ΔR3, ΔR4) is at 30°, 35°, 40°, 45° or 50°.

**7.** The method of any one of claims 4-6, wherein the first angular range (ΔR1) extends from 50°, 55°, 60°, 65° or 70° to 120°, 125°, 130°, 135° or 140°.

**8.** The method of any preceding claim, wherein the evaluation procedure comprises repeatedly initiating an updating procedure until a second termination criterion is fulfilled, wherein the updating procedure comprises:
determining (242), for a respective remaining camera in the set of remaining cameras ([REM]), a count (#CSP) of the scene points that are seen by the respective remaining camera and at least two reference cameras;
selecting (244), among the set of remaining cameras ([REM]), either one remaining camera or no remaining camera based on the count (#CSP) of the respective remaining camera;
adding (246) said one remaining camera to the secondary ordering ([COR2]); and
removing (247) said one remaining camera from the set of remaining cameras ([REM]),
wherein the second termination condition is fulfilled if no remaining camera is selected.

**9.** The method of claim 8, wherein said one remaining camera has a count (#CSP) that exceeds a first threshold (TH1).

**10.** The method of claim 8 or 9, wherein said selecting comprises: designating (252, 254) the respective remaining camera for which the count (#CSP) exceeds a first threshold (TH1) as a candidate camera; and selecting (256) the candidate camera with a largest count (#CSP) as said one remaining camera.

**11.** The method of claim 10, wherein the detection data is further indicative of a total number of feature points in said one or more images taken by the respective camera, wherein the method further comprises determining (243) a relation (SFR) between the count (#CSP) of scene points and the total number of feature points for the respective remaining camera, and wherein said selecting (244) further comprises: designating (253, 254) the respective remaining camera for which the relation (SFR) exceeds a second threshold (TH2) as a candidate camera.

**12.** The method of any preceding claim, wherein the first termination criterion is fulfilled when the secondary ordering ([COR2]) includes all cameras in the first ordering ([COR1]) except for the current pair of cameras (CCP).

**13.** The method of any preceding claim, wherein said obtaining (201) the detection data comprises: processing (201A) the one or more images taken by the respective camera for detection of feature points; determining (201B) associations between the feature points detected by different cameras; and assigning (201C) a respective scene point to each set of associated feature points.

**14.** The method of any preceding claim, wherein said obtaining (202) the estimated relative angle comprises processing (202A) the common feature points for estimation of the relative angle.

**15.** A computer-readable medium comprising computer instruction which, when executed by a processor, causes the processor to perform a method in accordance with any one of claims 1-14.

**16.** A device configured to determine an order for combining data from a plurality of cameras in extrinsic calibration of the plurality of cameras, said device comprising logic (51, 52) configured to operate the device to:
obtain detection data that is indicative of scene points seen by a respective camera among the plurality of cameras, wherein each scene point in included in a scene monitored by the plurality of cameras and is detectable as a feature point in one or more images taken by the respective camera;
obtain an estimated relative angle between each pair of cameras among the plurality of cameras;
generate a first ordering ([COR1]) of pairs of cameras based on the estimated relative angle;
repeatedly select a current pair of cameras (CCP) from said first ordering ([COR1]) until a first termination criterion is fulfilled;
initiate, for the current pair of cameras (CCP) from the first ordering, an evaluation procedure to generate a secondary ordering ([COR2]) of a set of remaining cameras ([REM]) among the plurality of cameras based on the detection data, wherein the first termination criterion is fulfilled when the secondary ordering ([COR2]) includes a predefined number of cameras, wherein the evaluation procedure sequentially adds a respective remaining camera to the secondary ordering ([COR2]) as a function of the scene points that are seen by the respective remaining camera and a given number of reference cameras, wherein the reference cameras comprise the current pair of cameras and any further camera in the secondary ordering; and
generate, when the first termination criterion is fulfilled, a final ordering ([FCOR]) of cameras by appending the secondary ordering ([COR2]) to the current pair of cameras (CCP) for which the first termination criterion is fulfilled,
wherein the logic (51, 52) is configured to, when generating the first ordering ([COR1]), operate the device to:
map the estimated relative angle of the respective pair of cameras to a plurality of predefined angular ranges to assign the respective pair of cameras to an angular range among the plurality of predefined angular ranges; and
arrange the respective pair of cameras in the first ordering ([COR1]) based on the assigned angular range and in accordance with a predefined order for the predefined angular ranges.
